(19) Europäisches Patentamt / European Patent Office / Office européen des brevets

(11) **EP 2 979 899 B1**

(12) **EUROPEAN PATENT SPECIFICATION**

(45) Date of publication and mention
of the grant of the patent:
**29.11.2017 Bulletin 2017/48**

(21) Application number: **14774188.8**

(22) Date of filing: **28.03.2014**

(51) Int Cl.:
*B60C 9/04* (2006.01)          *B60C 9/06* (2006.01)
*B60C 15/00* (2006.01)

(86) International application number:
**PCT/JP2014/059254**

(87) International publication number:
**WO 2014/157656 (02.10.2014 Gazette 2014/40)**

(54) **PNEUMATIC TIRE**

LUFTREIFEN

PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.03.2013 JP 2013072741**

(43) Date of publication of application:
**03.02.2016 Bulletin 2016/05**

(73) Proprietor: **The Yokohama Rubber Co., Ltd.
Minato-ku
Tokyo 105-8685 (JP)**

(72) Inventor: **NAKAJIMA, Miyuki
Hiratsuka-shi
Kanagawa 254-8601 (JP)**

(74) Representative: **Dilg, Haeusler, Schindelmann
Patentanwaltsgesellschaft mbH
Leonrodstrasse 58
80636 München (DE)**

(56) References cited:
**JP-A- H01 321 939          JP-A- H10 225 997
JP-A- H11 278 013          JP-A- 2001 001 715
JP-A- 2004 001 628          JP-A- 2008 006 925
JP-A- 2008 006 925          JP-A- 2008 174 167
JP-A- 2008 290 503          JP-A- 2010 228 646**

**Description**

TECHNICAL FIELD

The present invention relates to a pneumatic tire.

BACKGROUND

Racing tires, from which high levels of steering stability are demanded when driving at high speed, may take the form of a tire having a "half-radial" structure, in which carcass cords are biased with respect to the radial direction of the tire, and the angle of the carcass cords with respect to the circumferential direction of the tire as measured at a central position in the widthwise direction of the tread is from 55 to 85°; in such tires, the carcass cords may be constituted by nylon fiber cords.

When nylon fiber cords are used as the carcass cords in a half-radial cord arrangement of this sort, the problem arises that the carcass cords become incapable of sufficiently demonstrating their inherent cord properties, leading to insufficient improvement in steering stability and durability, if setting (solidification) occurs while compression-directional tensile force is applied to the carcass cords when the tire is being molded or vulcanized.

As will be discussed hereafter, the present invention solves the problem described above by altering the intermediate elongation values of the nylon fiber cords used in the carcass according to the location on the tire; examples of the conventional art pertaining to pneumatic tires that focus upon carcass cord intermediate elongation are as follows.

One proposed pneumatic tire that ensures steering stability and durability while offering improved ride comfort is a pneumatic tire in which the intermediate elongation value of the carcass used in the shoulders and sides of the tire is greater than the intermediate elongation value of the carcass used at locations outside these areas (Patent Document 1).

In another proposed tire, steering stability and mass are ensured while noise occurrence is suppressed by increasing the intermediate elongation value of the carcass cords located in the area below the belt layer to from 3 to 5% greater than that of that of the carcass cords in other areas (Patent Document 2).

In yet another proposed tire shown in Patent Document 3 and corresponding to the preamble of claim 1 load durability and drive stability are improved by forming a carcass cord of polyester fibers and by setting a twist factor K = T × √D in the range of 1000<K<2000, wherein D is the fineness of the fibers and T is the number of twists per 10 cm cord length.

However, these proposed pneumatic tires differ from the tire having a "half-radial" structure constituting the focus of the present invention, in which the carcass cords are biased with respect to the radial direction of the tire and have an angle of 55 to 85° with respect to the circumferential direction of the tire as measured at a central position along the widthwise direction of the tread, and do not suggest the pneumatic tire of the present invention.

PRIOR ART DOCUMENT

Patent Document

Patent Document 1: Japanese Unexamined Patent Application Publication No. 2009-23442A
Patent Document 2: Japanese Unexamined Patent Application Publication No. 2006-281984A
Patent Document 3: Japanese Unexamined Patent Application Publication No. JP H11 278013 A

SUMMARY OF THE INVENTION

Problem to be Solved by the Invention

An object of the present invention is to provide a pneumatic tire for uses such as racing that use nylon fiber cords as carcass cords in a half-radial cord arrangement, wherein the tire is capable of sufficiently exhibiting the inherent cord properties of the nylon fiber carcass cords and has superior steering stability and durability.

Means to Solve the Problem

The pneumatic tire of the present invention, which achieves the aforementioned object, has the arrangement described in (1) below:

(1) a pneumatic tire having a half-radial structure in which carcass cords are biased with respect to the radial direction of the tire and have an angle of 55 to 85° with respect to the circumferential direction of the tire as measured at a central position along the widthwise direction of the tread, wherein a twist coefficient $\alpha$ of 1,500 to 2,500, and a difference in intermediate elongation at 2.0 cN/dtex in the carcass cords between a central section and side sections of the tire is not more than 1.0%;
the twist coefficient $\alpha$ being N $\times$ $\sqrt{T}$;
N being the number of twists per 10 cm of length in the fiber cords; and
T being the fineness (dtex) of the fiber cords, the tire being characterized in that the carcass cords have an elastic modulus of 3 to 10 GPa.
The pneumatic tire according to the present invention more preferably has the arrangement set forth in (2) or (3) below.
(2) The pneumatic tire according to (1), wherein the carcass cords are continuously disposed along the entire circumference of the tire in the circumferential direction of the tire with a bead interposed therebetween.
(3) The pneumatic tire according to (1), wherein ends of the carcass cords with a bead interposed therebetween extend to beneath a belt.

Effect of the invention

In accordance with the present invention as in a first aspect, it is possible to provide a pneumatic tire for uses such as racing that use nylon fiber cords as carcass cords in a half-radial cord arrangement, wherein the tire is capable of sufficiently exhibiting the inherent cord properties of the nylon fiber carcass cords and has superior steering stability and durability.
In accordance with the present invention as in a second or a third aspect in particular, a pneumatic tire is provided that exhibits the effects of the present invention in particular with greater reliability and more prominently.

BRIEF DESCRIPTION OF THE DRAWINGS

FIG. 1 is a cross-sectional view in the tire meridian direction of a pneumatic tire according to the present invention.
FIG. 2 is a partially cut-out cross-sectional view of a half-radial structure pneumatic tire according to the present invention, and illustrates a schematic view of the cord arrangement of a carcass layer and two belt layers.
FIG. 3 is a cross-sectional view in the tire meridian direction illustrating locations from which measurement samples are taken when measuring the intermediate elongation of carcass cords in a central section and a side section.

BEST MODE FOR CARRYING OUT THE INVENTION

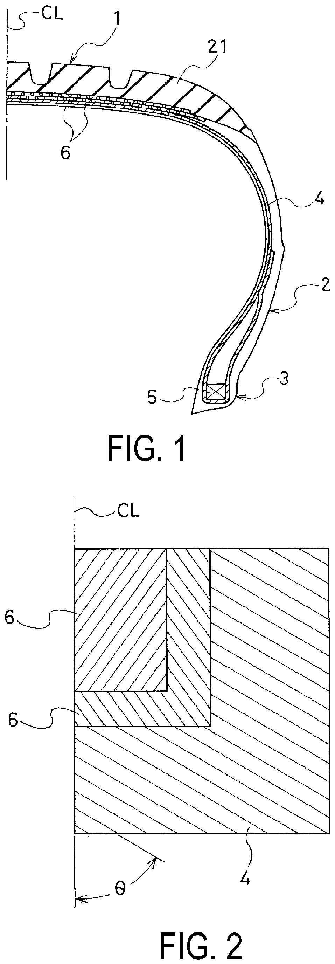

The pneumatic tire of the present invention will now be described in detail.
The pneumatic tire according to the present invention is a pneumatic tire having a half-radial structure in which carcass cords are biased with respect to the radial direction of the tire and have an angle of 55 to 85° with respect to the circumferential direction of the tire as measured at a central position along the widthwise direction of the tread, the tire being characterized in that the carcass cords have an elastic modulus of 3 to 10 GPa and a twist coefficient $\alpha$ of 1,500 to 2,500, and a difference in intermediate elongation at 2.0 cN/dtex in the carcass cords between a central section and side sections of the tire is not more than 1.0%.
The value of the twist coefficient $\alpha$ is calculated according to the formula $\alpha = N \times \sqrt{T}$, with N being the number of twists per 10 cm of length of the fiber cords, and T being the fineness (dtex) of the fiber cords.
An embodiment of the pneumatic tire according to the present invention will now be described with reference to FIGS. 1 and 2.
In FIG. 1, a tread section is labeled 1, a sidewall section is labeled 2, a bead section is labeled 3, belt layers are labeled 6, a tread rubber layer is labeled 21, and a tire equatorial line is labeled CL. A carcass layer 4 extends between a pair of left and right bead sections 3, 3, and an end of the carcass layer 4 is folded back from the inner side of the tire around a bead core 5 toward the outside of the tire. Apart from the embodiment illustrated in the drawings, the folded-back end of the carcass layer 4 may also extend to and be anchored beneath the belt layers 6. An embodiment is also acceptable in which the end of the carcass layer 4 is not wrapped around the bead core 5, but is positioned and anchored near the side of the bead core 5.
The carcass layer 4 is constituted by aligned multiple carcass cords coated by a carcass compound, and the carcass cords are formed from nylon fibers. The carcass cords are disposed on a bias with respect to the radial direction of the tire to form a "half-radial" carcass layer; in the carcass layer 4, the angle $\theta$ of the carcass cords to the circumferential direction of the tire is from 55 to 85° as measured at a central position along the widthwise direction of the tread.

Meanwhile, the belt layers 6 are disposed in the tread section 1 around the entire circumference of the tire to the outer circumferential side of the carcass layer 4. These belt layers 6 include reinforcing cords that are biased with respect to a tire circumferential direction and the reinforcing cords are disposed between the layers so as to intersect each other.

An angle θ of the carcass cords to the circumferential direction of the tire of less than 55° is undesirable, as the angle of the carcass cords may change due to lift during vulcanization molding, excessively increasing tread rigidity compared to side rigidity and negatively affecting ride comfort. An angle θ of exceeding 85° is also not preferable, as this angle will reduce rigidity and steering stability.

In the present invention, it is essential that the carcass cords have an elastic modulus of 3 to 10 GPa and a twist coefficient α of 1,500 to 2,500, and that a difference in intermediate elongation at 2.0 cN/dtex in the carcass cords between the central section and the side sections of the tire be not more than 1.0%.

Specifically, if the elastic modulus of the carcass cord is less than 3 GPa, there will be insufficient improvement in steering stability. The elastic modulus exceeding 10 GPa is also undesirable, as this elastic modulus will reduce the fatigue resistance of the cords, and thus tire durability.

If the twist coefficient of the carcass cord is less than 1,500, the fatigue resistance of the cords will decrease, reducing tire durability. If the twist coefficient exceeds 2,500, the elastic modulus of the cords will decrease, inhibiting sufficient improvement in steering stability.

A difference in intermediate elongation at 2.0 cN/dtex in the carcass cords between the central section and the side sections of the tire exceeding 1.0% will inhibit tensile force from being placed upon the cords in the side sections of the carcass, creating areas within the structure of the tire where the codes are slackened, with the result that steering stability and durability cannot be improved. A preferred minimum value for the difference in intermediate elongation is 0%.

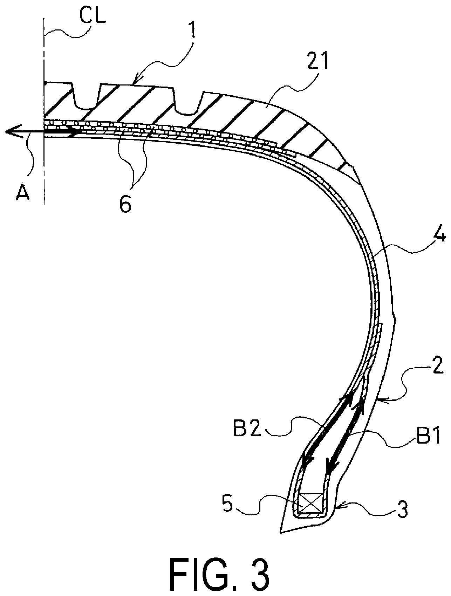

FIG. 3 is a cross-sectional view in the tire meridian direction illustrating locations from which measurement samples are taken when measuring the intermediate elongation of carcass cords in a central section and a side section. The specific method used to measure the intermediate elongation at 2.0 cN/dtex of the carcass cords in the central section and side sections will be described hereafter. Measurement samples are taken from a section centered on the tire equatorial line (labeled A in FIG. 3) for the central section, and from the turned-up section (labeled B1 in FIG. 3) if the tire carcass structure includes a turned-up carcass section, or from the turned-down part (labeled B2 in FIG. 3) if only a turned-down carcass section is present.

An overview of a method for manufacturing the pneumatic tire according to the present invention will now be described.

The nylon carcass cords forming part of the pneumatic tire according to the present invention can be obtained by modifying manufacturing conditions to yield an elastic modulus of 3 to 10 GPa, and carcass cords having a twist coefficient α of 1,500 to 2,500 can be obtained by setting the number of twists according to the fineness of the cords to impart the predetermined twist.

To obtain a difference in intermediate elongation at 2.0 cN/dtex in the carcass cords between the central section and the side sections of the tire of no more than 1.0%, a carcass structure that allows for more secure anchoring of the ends of the carcass cords can be selected for use in the process of molding and vulcanizing the tire.

To this end, the method of manufacturing the pneumatic tire according to the present invention preferably involves forming the tire by disposing the carcass cords so that the carcass cords are continuously disposed around the entire circumference of the tire along the circumferential direction of the tire with the beads interposed therebetween, as disclosed in Unexamined Japanese Patent Application Publication H10-225997, or disposing nylon carcass cords so that the ends of the carcass cords wrap around the beads and back up to underneath the belt layers 6, followed by vulcanizing and molding the tire.

Examples

The specific arrangement and effects of the pneumatic tire according to the present invention will now be described with reference to examples.

Working Examples 1 to 3, Conventional Examples 1 to 6

Using a test tire size of 225/50 R16 92V, five tires were prepared for each working example and comparative example and mounted on JATMA standard rims to create test tires.

The specifications for the carcass structures of the pneumatic radial tires according to the various working examples and comparative examples were as shown in table 1. The carcass structure described as "conventional" is the structure illustrated in FIG. 1.

The test tires were evaluated for steering stability, ride comfort, load durability, and tire weight according to the testing/evaluation methods described in sections (B) through (D) hereafter; results are shown in table 1.

The difference in intermediate elongation at 2.0 cN/dtex in the carcass cords between the central section and the side sections in the present invention is determined according to the method described in section (A) hereafter.

(A) Method of determining difference in intermediate elongation at 2.0 cN/dtex in carcass cords between central section and side sections

Samples for determining the intermediate elongation at 2.0 cN/dtex between the central section and the side sections in the same carcass cord in the finished pneumatic tire following vulcanization and molding were taken according to the following guidelines.

For the central section, a sample cord piece of a length capable of being subjected to a tensile test between two left and right grips spaced a total of 10 cm apart was taken from an area centered on the tire equatorial line. If a sample cord piece long enough to be tested between two left and right grips spaced a total of 10 cm apart could not be taken, the grip spacing was reduced in increments of 0.5 cm until tensile testing was possible at the length of the obtainable sample cord piece. Care was taken to obtain testable sample cord pieces that were as long as possible. If a rubber adhered to the sample cord piece, the rubber was carefully removed (likewise hereafter).

For the side section, if the tire had a carcass structure comprising a section of the carcass that was turned up around the bead section, a sample cord piece long enough to be tensile tested at a grip spacing of 10 cm was taken from the turned-up carcass section. If a sample cord piece long enough to be tested between grips spaced a total of 10 cm apart could not be taken, the grip spacing was reduced in increments of 0.5 cm until tensile testing was possible at the length of the obtainable sample cord piece. Care was taken to obtain testable sample cord pieces that were as long as possible.

If the tire had a carcass structure comprising only turned-down sections, a sample cord piece long enough to be tensile tested at a grip spacing of 10 cm was taken from the turned-down carcass section. If a sample cord piece long enough to be tested between grips spaced a total of 10 cm apart could not be taken, the grip spacing was reduced in increments of 0.5 cm until tensile testing was possible at the length of the obtainable sample cord piece. Care was taken to obtain testable sample cord pieces that were as long as possible.

The sample cord pieces were colored at two locations corresponding to the testing length (grip spacing) so as to make pre- and post-testing length apparent.

The sample cord pieces were placed in a tensile test machine with grips set 10 cm apart so that the colored locations were aligned therewith, and tensile testing was performed by applying tensile force equivalent to 2.0 cN/dtex as determined according to the fineness (dtex) of the test cords at a rate of $300 \pm 20$ mm/min. The testing was performed in a constant atmosphere of $20°C \pm 2°C$ temperature and $65 \pm 2\%$ relative humidity. After the tensile force was released, the sample cord piece was removed, the distance between the colored locations was determined, and elongation (%) was determined on the basis of the measured values.

Elongation (%) was calculated to one decimal place according to the following formula.

$$\text{Elongation (\%)} = (\text{post-tensile test core length/original cord length}) \times 100$$

Testing was performed five times, an average value was determined, and the average value was rounded to a single decimal place to determine the elongation (%) of the sample.

The test described above was performed on the central section and the two side sections of the carcass cords, and the difference in values for elongation (%) so obtained was taken as the difference (%) in intermediate elongation at 2.0 cN/dtex between the central section and the side sections of the carcass cords.

(B) Steering stability

The test tires were mounted on a 2,000 cc passenger vehicle, and five test drivers drove the vehicle on a slalom test course with pylons set at fixed intervals and evaluated driving feel.

Evaluation results were expressed as index values against 100 for a conventional tire. The higher the index value is, the more superior steering stability was.

(C) Ride comfort

The test tires were mounted on a 2,000 cc passenger vehicle, and five test drivers drove the vehicle on a straight test course having an uneven surface at 50 km/h and evaluated driving feel. Evaluation results were expressed as index values against 100 for a conventional tire. The higher the index value is, the more superior ride comfort was.

(D) Load durability:

After completing a load durability test according to JIS D-4230 at a drum diameter of 1707 mm, the load was increased at a rate of 20%/5 hours, and testing was continued until the tire ruptured. Durability was evaluated by determining the total length of time until the test tire ruptured. Evaluation results are expressed as index values against 100 for a conventional tire (conventional example 1); the higher the index value is, the better the load durability of the tire was.

As is clear from the results shown in table 1, the pneumatic tire of the present invention exhibits a superb balance of superior ride comfort, steering stability, and durability.

[Table 1]

| | Conven-tional Example 1 | Conven-tional Example 2 | Conven-tional Example 3 | Conven-tional Example 4 | Conven-tional Example 5 |
|---|---|---|---|---|---|
| Carcass structure | Conven-tional | Conven-tional | Conven-tional | Conven-tional | Conven-tional |
| Angle (°) of carcass cord with respect to tire circumferential direction | 70 | 45 | 90 | 70 | 70 |
| Elastic modulus (GPa) of carcass cord | 5 | 6 | 4.5 | 13 | 1.5 |
| Twist coefficient of carcass cord | 2000 | 1800 | 2100 | 3000 | 3200 |
| Difference (%) in intermediate elongation in carcass cords between central section and side sections of tire | 2.5 | 3 | 2 | 1.5 | 3.5 |
| Ride comfort performance | 100 | 85 | 95 | 90 | 105 |
| Steering stability | 100 | 90 | 80 | 105 | 80 |
| Durability | 100 | 95 | 102 | 85 | 105 |

[Table 1] (Continued)

| | Conventional Example 6 | Working Example 1 | Working Example 2 | Working Example 3 |
|---|---|---|---|---|
| Carcass structure | Conventional | Conventional | Continuously wrapped | TU-end belt suspended |
| Angle (°) of carcass cord with respect to tire circumferential direction | 70 | 70 | 70 | 70 |
| Elastic modulus (GPa) of carcass cord | 7 | 5 | 5 | 5 |
| Twist coefficient of carcass cord | 1000 | 2000 | 2000 | 2000 |
| Difference (%) in intermediate elongation in carcass cords between central section and side sections of tire | 2.5 | 0.7 | 0.3 | 0.3 |
| Ride comfort performance | 92 | 102 | 105 | 105 |
| Steering stability | 102 | 110 | 115 | 115 |
| Durability | 90 | 105 | 105 | 105 |

Reference numerals:

1:      Tread section
2:      Sidewall section
3:      Bead section
4:      Carcass layer
5:      Bead core
6:      Belt layer

21:     Tread rubber layer
CL:     Tire equatorial line
θ:      angle of carcass cords
A:      Sampling location for test piece (carcass cord piece) used to measure intermediate elongation
B1:     Sampling location for test piece (carcass cord piece) used to measure intermediate elongation
B2:     Sampling location for test piece (carcass cord piece) used to measure intermediate elongation

**Claims**

1.  A pneumatic tire having

    a half-radial structure in which carcass cords (4) are biased with respect to a radial direction of the tire and have an angle of 55 to 85° with respect to a circumferential direction of the tire as measured at a central position along a widthwise direction of a tread (1),
    wherein the carcass cords (4) have a twist coefficient $\alpha$ of 1,500 to 2,500, the twist coefficient $\alpha$ being $N \times \sqrt{T}$, N being the number of twists per 10 cm of length in the fiber cords, and
    T being a fineness, dtex, of the fiber cords, wherein a difference in intermediate elongation at 2.0 cN/dtex in the carcass cords (4) between a central section and side sections (2) of the tire is not more than 1.0%, **characterized in that** the carcass cords (4) have an elastic modulus of 3 to 10 GPa.

2.  The pneumatic tire according to claim 1, wherein
    the carcass cords (4) are continuously disposed along an entire circumference of the tire in the circumferential direction of the tire with a bead (5) interposed therebetween.

3.  The pneumatic tire according to claim 1, wherein
    the carcass cords (4) are disposed so that bead-end sections thereof wrap around a bead portion (5) and extend to underneath a belt layer (6).

**Patentansprüche**

1.  Luftreifen, aufweisend
    eine halbradiale Struktur, in welcher Karkassencordfäden (4) bezüglich einer Radialrichtung des Reifens vorgespannt sind und bezüglich einer Umfangsrichtung des Reifens einen Winkel von 55 bis 85° aufweisen, wie an einer mittleren Position entlang der Breitenrichtung einer Lauffläche (1) gemessen,
    wobei die Karkassencordfäden (4) einen Verdrillungskoeffizienten a von 1.500 bis 2.500 aufweisen, der Verdril-lungskoeffizient a $N \times \sqrt{T}$ ist,
    wobei N die Anzahl von Verdrillungen pro 10 cm Länge in den Fasercordfäden ist und T ein Feinheitsgrad, dtex, der Fasercordfäden ist,
    wobei
    zwischen einem Mittelabschnitt und Seitenabschnitten (2) des Reifens ein Unterschied der mittleren Dehnung bei 2,0 cN/dtex in den Karkassencordfäden (4) nicht mehr als 1,0 % beträgt, **dadurch gekennzeichnet, dass** die Karkassencordfäden (4) einen Elastizitätsmodul von 3 bis 10 GPa aufweisen.

2.  Luftreifen nach Anspruch 1, wobei
    die Karkassencordfäden (4) entlang eines gesamten Umfangs des Reifens in Umfangsrichtung des Reifens kontinuierlich angeordnet sind, mit einem dazwischen angebrachten Reifenwulst (5).

3.  Luftreifen nach Anspruch 1, wobei
    die Karkassencordfäden (4) derart angebracht sind, dass Reifenwulst-Endabschnitte davon sich um einen Wulstabschnitt (5) wickeln und sich unter eine Gürtelschicht (6) erstrecken.

**Revendications**

1.  Bandage pneumatique ayant
    une structure semi-radiale dans laquelle des câbles de carcasse (4) sont sollicités par rapport à une direction radiale du bandage et présentent un angle de 55 à 85° par rapport à une direction circonférentielle du bandage, tel que mesuré à une position centrale le long d'une direction de la largeur d'une bande de roulement (1),
dans lequel les câbles de carcasse (4) ont un coefficient de torsion $\alpha$ de 1500 à 2500, le coefficient de torsion $\alpha$ étant N x $\sqrt{T}$,
N étant le nombre de tours pour 10 cm de longueur dans les câbles en fibres et T étant une finesse, dtex, des câbles en fibres,
dans lequel
une différence d'allongement intermédiaire à 2,0 cN/dtex dans les câbles de carcasse (4) entre une section centrale et les sections latérales (2) du bandage n'est pas supérieure à 1,0 %, **caractérisé en ce que** les câbles de carcasse (4) ont un module élastique de 3 à 10 GPa.

2. Bandage pneumatique selon la revendication 1, dans lequel
les câbles de carcasse (4) sont disposés de façon continue le long d'une circonférence entière du bandage dans la direction circonférentielle du bandage avec un talon (5) intercalé entre eux.

3. Bandage pneumatique selon la revendication 1, dans lequel
les câbles de carcasse (4) sont disposés de sorte que les sections d'extrémité de talon de ceux-ci enveloppent une partie de talon (5) et s'étendent jusqu'en dessous d'une couche de ceinture (6).

FIG. 1

FIG. 2

FIG. 3

**EP 2 979 899 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009023442 A
- JP 2006281984 A
- JP H11278013 A
- JP H10225997 B